# EUROPEAN PATENT APPLICATION

(11) **EP 4 520 926 A1**
(43) Date of publication of application: **12.03.2025**
(21) Application number: 24188107.7
(22) Date of filing: 11.07.2024
(51) Int. Cl.: F01D 11/00, F01D 11/22, F01D 17/02, F01D 21/00, G01B 7/14, F01D 11/12, F01D 11/14

(54) **CLEARANCE MEASUREMENT BETWEEN SEAL ELEMENTS OF A GAS TURBINE ENGINE**

(30) Priority: 11.09.2023 US 202318464792
(71) Applicant: RTX Corporation, Farmington, CT 06032 (US)
(72) Inventor: WARREN, Eli, Farmington, 06032 (US)
(74) Representative: Dehns

(57) **Abstract**

A stator assembly of a gas turbine engine (20) includes a stator (62) including at least a stator vane (102) and a stator inner platform (76) located radially inboard of the stator vane (102). A stator inner airseal (74) is positioned radially inboard of the stator inner platform (76). The stator inner airseal (74) is configured to define a seal arrangement with two or more knife edges (64) of a radially adjacent rotating component (60). A sensor (86) is positioned at the stator inner airseal (74). The sensor (86) includes a sensor body (88) configured to be positioned axially between the knife edges (64), and configured to detect a radial distance from the sensor (86) to the radially adjacent rotating component (60).

## Description

### BACKGROUND

Exemplary embodiments of the present disclosure pertain to the art of gas turbine engines, and more particularly to data collection during operation of a gas turbine engine.

Testing of operation of gas turbine engines requires the collection of data regarding various components and locations on the gas turbine engine. This data collection often includes the measurement of clearances between components during operation of the gas turbine engine. One such location for the measurement of clearances is radial proximity between stator segments and a rotating hub.

It is difficult to measure this clearance in part because the radial gap is large relative to the axial and circumferential space in the seal in between the knife edges defining the seal. If a traditional metallic proximity probe, such as a capacitance or eddy-current probe, on the stator axially between the knife edges of the rotor hub, there is a risk of impact with knife edges with axial shift of the rotor hub. To compound matters, some development assets include the ability to adjust this gap by moving the stator segments radially in and out relative to the rotating rotor hub, thereby requiring the validation of such adjustment. In addition to these challenges, the egress of a traditional instrumentation lead thru the gas-path of the gas turbine engine significantly changes the aerodynamic properties expected thru the stator segments. Current traditional proximity probes do not satisfy these requirements.

### BRIEF DESCRIPTION

In one exemplary embodiment, a stator assembly of a gas turbine engine includes a stator including at least a stator vane and a stator inner platform located radially inboard of the stator vane. A stator inner airseal is positioned radially inboard of the stator inner platform. The stator inner airseal is configured to define a seal arrangement with two or more knife edges of a radially adjacent rotating component. A sensor is positioned at the stator inner airseal. The sensor includes a sensor body configured to be positioned axially between the knife edges, and configured to detect a radial distance from the sensor to the radially adjacent rotating component.

In a further embodiment of the previous embodiment, the sensor body is sized and positioned such that the sensor body is configured to be positioned axially between the knife edges during all anticipated operating conditions of the gas turbine engine.

In a further embodiment of any of the previous embodiments the sensor body is positioned in a trench formed in the stator inner airseal.

In a further embodiment of any of the previous embodiments the sensor is a capacitance sensor.

In a further embodiment of any of the previous embodiments the sensor body has a radial thickness in the range of .005" to .020".

In a further embodiment of any of the previous embodiments the sensor further includes a signal lead extending from the sensor body to outside of the stator assembly.

In a further embodiment of any of the previous embodiments the signal lead extends through an inner platform opening in the stator inner platform.

In a further embodiment of any of the previous embodiments the signal lead extends along a stator vane surface of the stator vane.

In a further embodiment of any of the previous embodiments the signal lead is secured to the stator vane surface via an adhesive.

In a further embodiment of any of the previous embodiments the stator further includes a stator outer platform positioned radially outboard of the stator vane, and the signal lead extends through an outer platform opening in the stator outer platform.

In another exemplary embodiment, a gas turbine engine includes a rotor configured to rotate about an engine central longitudinal axis. The rotor includes a rotor body, and two or more knife edges extending radially outwardly from the rotor body. A stator assembly is positioned radially outboard of the rotor. The stator assembly includes a stator including at least a stator vane and a stator inner platform located radially inboard of the stator vane. A stator inner airseal is positioned radially inboard of the stator inner platform. The stator inner airseal defines a seal arrangement with the two or more knife edges. A sensor is positioned at the stator inner airseal. The sensor includes a sensor body positioned axially between the knife edges and configured to detect a radial distance from the sensor to the rotor body.

In a further embodiment of any of the previous embodiments the sensor body is sized and positioned such that the sensor body is configured to be positioned axially between the knife edges during all anticipated operating conditions of the gas turbine engine.

In a further embodiment of any of the previous embodiments the sensor body is positioned in a trench formed in the stator inner airseal.

In a further embodiment of any of the previous embodiments the sensor is a capacitance sensor.

In a further embodiment of any of the previous embodiments the sensor body has a radial thickness in the range of .005" to .020".

In a further embodiment of any of the previous embodiments the sensor further includes a signal lead extending from the sensor body to outside of the stator assembly.

In a further embodiment of any of the previous embodiments the signal lead extends through an inner platform opening in the stator inner platform.

In a further embodiment of any of the previous embodiments the signal lead extends along a stator vane surface of the stator vane.

In a further embodiment of any of the previous embodiments the signal lead is secured to the stator vane surface via an adhesive.

In a further embodiment of any of the previous embodiments the stator further includes a stator outer platform positioned radially outboard of the stator vane, and the signal lead extends through an outer platform opening in the stator outer platform.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a schematic illustration of an embodiment of a sealing arrangement of a gas turbine engine;
FIG. 3, is a cross-sectional view of an embodiment of a sealing arrangement of a gas turbine engine including a sensor;
FIG. 4 is an illustration of installation of an embodiment of a sensor at a stator inner airseal;
FIG. 5 is a perspective view of an embodiment of a sensor;
FIG. 6 is an illustration of routing of a signal lead of a sensor;
FIG. 7 is another illustration of routing of a signal lead of a sensor; and
FIG. 8 is yet another illustration of routing of a signal lead of a sensor.

### DETAILED DESCRIPTION

A detailed description of one or more embodiments of the disclosed apparatus and method are presented herein by way of exemplification and not limitation with reference to the Figures.

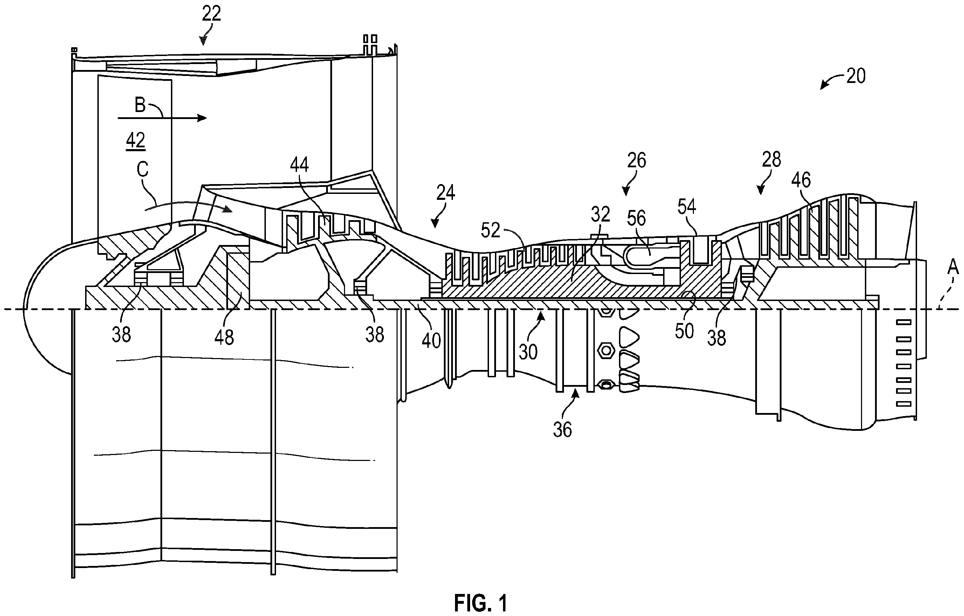

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3: 1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5} (where °R = K x 9/5). The "Low corrected fan tip speed" as disclosed herein according to one non-limiting embodiment is less than about 1150 ft/second (350.5 m/sec).

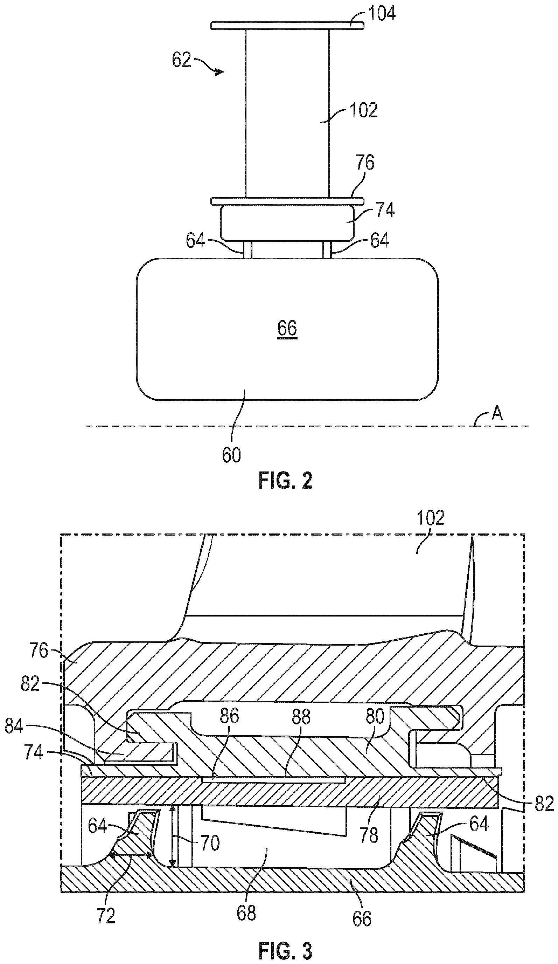

Referring now to FIG. 2, the high pressure compressor 52 includes a high pressure compressor rotor 60 located at and rotatable about the engine central longitudinal axis A and a stator 62 located radially outboard of the rotor 60 with respect to the engine central longitudinal axis A. One skilled in the art will readily appreciate that while this disclosure is presented in the context of the high pressure compressor 52, one skilled in the art will readily appreciate that the features of the present disclosure may be utilized in other locations of the gas turbine engine 20, such as, for example, low pressure compressor 44, the high pressure turbine 54, or the low pressure turbine 46. A seal arrangement is positioned between the rotating rotor 60 and the rotationally fixed stator 62 to prevent leakage along the flowpath of the high pressure compressor 52. In some embodiments, the seal arrangement is defined by a two or more knife edges 64 extending radially outwardly from a rotor body 66 of the rotor 60 and circumferentially about the engine central longitudinal axis A. The knife edges 64, as illustrated in FIG. 3, are axially spaced apart by a knife edge spacing 68. In some embodiments, the knife edges 64 have a radial height 70 greater than an axial thickness 72.

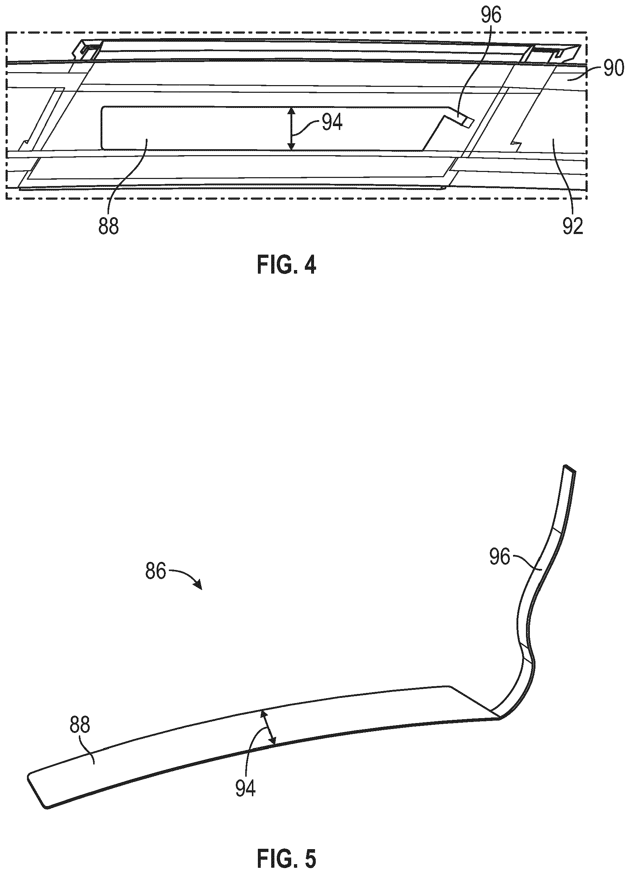

The knife edges 64 are configured to interact with an inner airseal 74 installed at a radially inner platform 76 of the stator 62. In some embodiment, the inner airseal 74 includes an abradable seal element 78 defining a radially inner extent of the inner airseal 74, which defines a seal interface with the knife edges 64. The abradable seal element 78 is installed in a seal carrier 80, which is installed into the inner platform 76 by, for example, a seal carrier hook 82 engaged with an inner platform hook 84. A sensor 86 is installed to the stator 62, and in particular to the inner airseal 74, with the sensor 86 including a sensor body 88 being configured to measure a distance between the sensor body 88 and the rotor body 66 between the knife edges 64, which is indicative of a radial distance between the inner airseal 74 and the rotor body 66. In some embodiments, the sensor 86 is a capacitance sensor, but one skilled in the art will recognize that other types of sensors 86 may be utilized. In some embodiments, the sensor body 88 is installed to a radially inner carrier surface 90 of the seal carrier 80, so the sensor body 88 resides, as shown in FIG. 4, in a trench 92 formed in the seal element 78. The sensor body 88 is axially positioned so that an entire axial width 94 of the sensor body 88 is located in the axial knife edge spacing 68 between axially-adj acent knife edges 64. Further, the sensor body 88 is sized and positioned such that even with anticipated axial variation in the knife edge 64 position, the axial width 94 is between the axially adjacent knife edges 64.

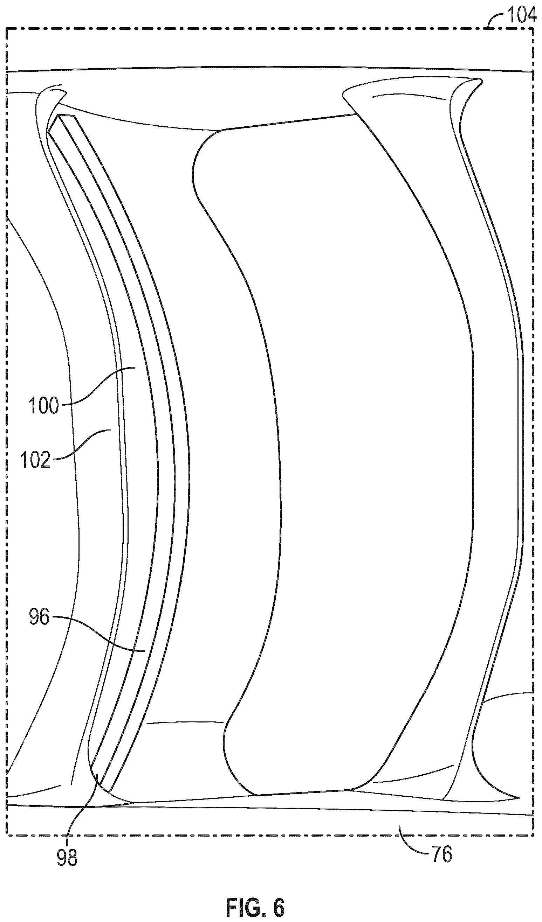

Referring to FIG. 5, the sensor body 88 is, in a free state, substantially elongated and flat and planar, and thin, in the range of 0.005" to .020" (about 0.13 mm to 0.51 mm) in thickness, resulting in flexibility such that the sensor body 88 can be bent to conform to a shape of the trench 92. A signal lead 96, such as an electrical of fiber optic lead, extends from the sensor body 88 and out of the stator 62 as illustrated in FIG. 6, 7 and 8. As shown in FIG. 6, the signal lead 96 extends through an inner platform opening 98 in the inner platform 76 and extends along a vane surface 100 of a stator vane 102 toward an outer platform 104 of the stator 62. In some embodiments the signal lead 96 is fixed to the vane surface 100 by, for example, a glue or other adhesive to stabilize the position of the signal lead 96 and to minimize the obstruction of the signal lead 96 into the flowpath.

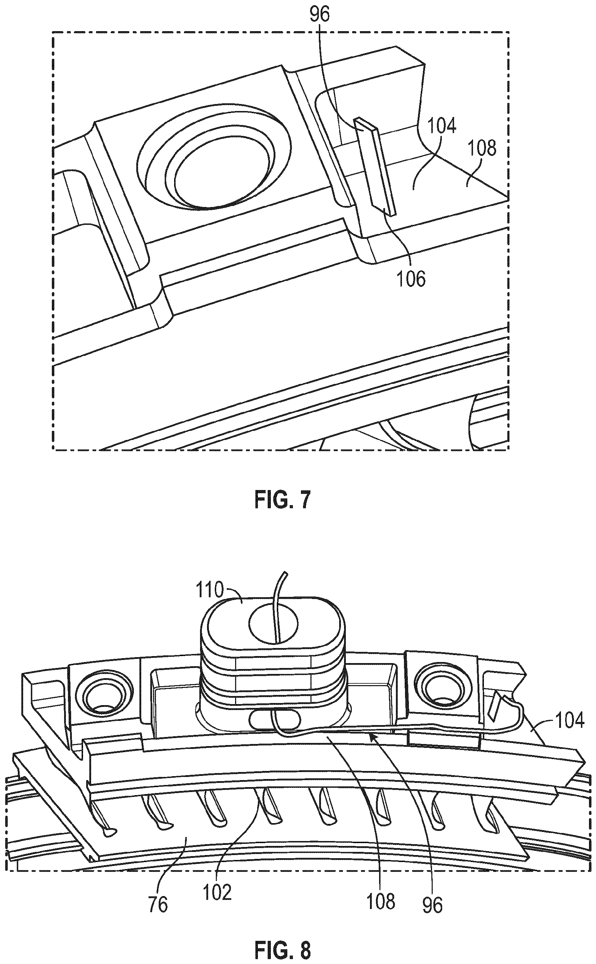

As shown in FIG. 7, the signal lead 96 extends through an outer platform opening 106 in the outer platform 104 to a back surface 108 of the outer platform 104. In some embodiments, as illustrated in FIG. 8, the signal lead 96 may be further routed along the back surface 108, and through other structure of the stator 62 such as a doghouse 110 and out of the gas turbine engine 20 through a casing (not shown) located radially outboard of the outer platform 104.

In some embodiments, the stator 62, the inner airseal 74 and the sensor 86 define a stator assembly, which may be pre-fabricated prior to installation into the gas turbine engine 20. This allows for customization of the stator assembly regarding placement or nonplacement of the sensor 86, and streamlines and improves efficiency of assembly of the gas turbine engine 20.

In some embodiments, the sensor 86 is configured for operation in temperatures less than 500 degrees Fahrenheit, but one skilled in the art will appreciate that in some embodiments sensors 86 with other temperature capabilities may be used. In some embodiments, the sensor 86 is a "wand" sensor 86, which is capacitance based and is made from, for example, printed Kapton^{®} and thin copper traces. The copper is arranged such that it makes up a center conductor and a guard, which mimics a traditional metallic capacitance-based proximity probe. The Kapton^{®} is the electrical insulator keeping both the center conductor and guard insulated from the ground plane. The use of such a sensor 86, with a relatively small signal lead 96, allows for the egress out of a component to an area where a standard coaxial cable can be attached thereto. The coaxial cable can then be used with traditional signal conditioning. If the sensor 86 is designed to fit into-and be built into-the stator 62, the impact to the system can be minimized. The thickness of the sensor 86 allows the sensor body 88 and the signal lead 96 to be bent and formed to fit the surfaces of the stator 62, thereby minimizing the aerodynamic impact to the system. It also allows the transition to flexible cable, such as coaxial cable to occur on the outer surface of the stator 62 but inside the casing 112, thereby minimizing risk during engine/rig assembly (due to the relative durability of the traditional lead). Further, utilizing the configurations disclosed herein, proximity measurement between the inner airseal 74 and the rotor body 66 is obtained without impacting the effectiveness of the seal arrangement.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A stator assembly of a gas turbine engine (20), comprising:
a stator (62) including at least:
a stator vane (102); and
a stator inner platform (76) located radially inboard of the stator vane (102);
a stator inner airseal (74) disposed radially inboard of the stator inner platform (76), the stator inner airseal (74) configured to define a seal arrangement with two or more knife edges (64) of a radially adjacent rotating component (60); and
a sensor (86) disposed at the stator inner airseal (74), the sensor (86) including a sensor body (88) configured to be positioned axially between the knife edges (64) and configured to detect a radial distance from the sensor (86) to the radially adjacent rotating component (60).

2. The stator assembly of claim 1, wherein the sensor body (88) is sized and positioned such that the sensor body (88) is configured to be positioned axially between the knife edges (64) during all anticipated operating conditions of the gas turbine engine (20).

3. The stator assembly of claim 1 or 2, wherein the sensor body (88) is disposed in a trench (92) formed in the stator inner airseal (74).

4. The stator assembly of claim 1, 2 or 3, wherein the sensor (86) is a capacitance sensor.

5. The stator assembly of any preceding claim, wherein the sensor body (88) has a radial thickness in the range of .005" to .020" (about 0.13 mm to 0.51 mm).

6. The stator assembly of any preceding claim, wherein the sensor (86) further includes a signal lead (96) extending from the sensor body (88) to outside of the stator assembly.

7. The stator assembly of claim 6, wherein the signal lead (96) extends through an inner platform opening (98) in the stator inner platform (76).

8. The stator assembly of claim 6 or 7, wherein the signal lead (96) extends along a stator vane surface (100) of the stator vane (102).

9. The stator assembly of claim 8, wherein the signal lead (96) is secured to the stator vane surface (100) via an adhesive.

10. The stator assembly of any of claims 6 to 9, wherein:
the stator (62) further includes a stator outer platform (104) disposed radially outboard of the stator vane (102); and
the signal lead (96) extends through an outer platform opening (106) in the stator outer platform (104).

11. A gas turbine engine (20) comprising:
a rotor (60) configured to rotate about an engine central longitudinal axis (A), the rotor (60) including:
a rotor body (66); and
two or more knife edges (64) extending radially outwardly from the rotor body (66); and
the stator assembly of any preceding claim disposed radially outboard of the rotor (60), the stator inner airseal (74) defining a seal arrangement with the two or more knife edges (64), and the sensor body (88) positioned axially between the knife edges (64) and configured to detect a radial distance from the sensor (86) to the rotor body (66).
